# FASCICULE DE BREVET EUROPEEN

(11) **EP 0 718 733 B1**
(45) Date de publication et mention de la délivrance du brevet: **15.04.1998**
(21) Numéro de dépôt: 95402634.0
(22) Date de dépôt: 22.11.1995
(51) Int. Cl.: G05D 1/08

(54) **Système de palonnier à gradient d'effort pour hélicoptère**
Giersteuerung mit Kraftgradientenrückführung für Hubschrauber
Yaw control with gradient of increasing effort feedback for helicopter

(30) Priorité: 22.12.1994 FR 9415465
(43) Date de publication de la demande: 26.06.1996
(73) Titulaire: EUROCOPTER, F-13725 Marignane Cédex (FR)
(72) Inventeur: Rollet, Philippe A.J., F-13880 Velaux (FR); Bellera, Jacques S.L., F-13100 Aix-en-Provence (FR)
(74) Mandataire: Bonnetat, Christian

(56) Documents cités:
- EP-A- 0 160 834
- GB-A- 2 068 598
- GB-A- 2 140 174

## Description

La présente invention concerne un système de palonnier pour hélicoptère et, plus généralement, tout dispositif permettant de contrôler un aéronef sur l'axe de lacet.

On sait que de nombreux hélicoptères comportent un rotor de queue avec ou sans carénage, chargé de contrecarrer le couple de réaction engendré par le rotor principal sur le fuselage desdits hélicoptères et qu'un tel rotor de queue, à pas variable, est de plus utilisé par le système de commande de vol de ces hélicoptères pour piloter ceux-ci en lacet. A cet effet, le pas des pales dudit rotor de queue est commandé par le pilote, par action sur le palonnier de l'hélicoptère. On sait de plus qu'il existe d'autres dispositifs de contrôle en lacet d'hélicoptère, tel que par exemple celui fabriqué par le constructeur américain Mc DONNELL DOUGLAS, sous le nom de NOTAR.

Ainsi, si le système de commande de vol est de type usuel avec rotor arrière, la position du palonnier reproduit, lorsque l'hélicoptère est à l'équilibre en lacet (c'est-à-dire lorsque la vitesse angulaire de lacet est nulle), l'amplitude du pas appliqué aux pales du rotor arrière. Or, on sait que, sur un tel hélicoptère, le pas appliqué aux pales du rotor de queue dépend fortement du cas de vol, et en particulier des vitesses air, longitudinale, latérale et verticale.

Il en résulte donc pour le pilote que, même en l'absence de toute manoeuvre en lacet, la position statique du palonnier est essentiellement variable selon le cas de vol.

Pour minimiser cet inconvénient, on a déjà utilisé des dispositifs contribuant à limiter les déplacements du palonnier lorsque, en dehors de toute manoeuvre en lacet, les conditions de vol évoluent. Par exemple, sur la plupart des hélicoptères moyens et lourds, on prévoit des dispositifs de couplage entre le pas collectif des pales du rotor principal et le pas des pales du rotor arrière. De tels dispositifs de couplage du pas collectif et du pas de commande en lacet contribuent à minimiser les déplacements de palonnier nécessaires pour maintenir l'équilibre en lacet, lorsque le pilote fait évoluer la vitesse verticale par action sur le pas collectif. Cependant, quel que soit le degré de sophistication de tels dispositifs, il est impossible d'annuler totalement les déplacements du palonnier dans la mesure où, de par le principe même de la commande, la position du palonnier doit, à l'équilibre, informer le pilote de l'amplitude du pas appliqué sur les pales du rotor arrière et de la marge de commande restant disponible pour les manoeuvres en lacet.

Cette évolution de la position du palonnier en fonction du cas de vol conduit à installer, sur la plupart des hélicoptères, un palonnier à friction, sans effort de rappel. Un tel palonnier à friction est très simple à réaliser et il évite au pilote d'avoir à maintenir un effort statique au pied, lorsque les conditions d'équilibre en lacet de l'hélicoptère sont modifiées. Après avoir été déplacé pour changer de condition d'équilibre, le palonnier conserve, grâce à la friction, sa nouvelle position si aucun effort n'est exercé.

En contrepartie de sa simplicité, un palonnier à friction comporte deux inconvénients principaux :
- lorsque l'hélicoptère est équipé d'un dispositif de pilotage automatique intervenant sur le pilotage en lacet, la détection de l'état de pilotage ou de l'état d'absence de pilotage par le pilote lui-même et la motorisation du palonnier sont relativement complexes. Une telle détection requiert, en général, l'utilisation de bielles à contacts, qui sont difficiles à régler, tandis que le dispositif de motorisation du palonnier doit comporter un débrayage pour que le pilote ne ressente que la friction, lors de ses actions au pied ;
- lorsque le pilote écarte le palonnier de sa position d'équilibre pour effectuer une manoeuvre, par exemple une rotation en lacet en vol stationnaire, l'absence d'effort antagoniste progressif lui ôte toute sensation tactile de l'amplitude de l'ordre appliqué. Que celui-ci soit faible ou important, l'effort à exercer par le pilote reste le même (égal à la friction) et s'annule dès lors que la réponse souhaitée est atteinte (pas d'effort statique). Il en résulte que le pilote n'a aucun moyen, sauf en regardant visuellement la position de ses pieds, ce qui est peu pratique, de mémoriser la position initiale du palonnier afin de retrouver rapidement la position d'équilibre en fin de manoeuvre. Sur des arrêts de rotation rapides en lacet, ceci se traduit souvent par quelques oscillations en cap résultant du tâtonnement nécessaire pour retrouver la position d'équilibre. Ainsi, l'absence de gradient d'effort rend difficile le dosage des actions au pied du pilote pendant les manoeuvres en lacet, et ceci d'autant plus que la manoeuvre est plus brusque.

Par ailleurs, sur quelques hélicoptères, on a déjà monté des palonniers dits à gradient d'effort, c'est-à-dire des palonniers soumis à l'action de moyens élastiques de rappel vers la position initiale avant la manoeuvre. De tels palonniers à gradient d'effort permettent d'éviter les deux inconvénients précités :
- la détection de l'état de pilotage humain ou de l'état de pilotage automatique peut s'effectuer sur la base d'une mesure d'écart par rapport au point neutre des efforts (possibilité de supprimer la bielle à contact) et la motorisation peut consister simplement à déplacer ce point neutre ;
- le gradient d'effort donne au pilote un retour d'information (sensation tactile) sur l'amplitude du déplacement commandé. Les arrêts de rotation à un cap précis sont beaucoup plus nets, sans tendance au dépassement. Il suffit que le pilote relâche l'effort au pied pour que la rotation s'arrête (avec le palonnier à friction, il faut exercer un effort inverse pendant un temps non prévisible à l'avance).

Cependant, malgré ces intéressantes caractéristiques, les palonniers à gradient d'effort ne sont utilisés que sur peu d'hélicoptères, car ils nécessitent un dispositif de débrayage et de recentrage des efforts (généralement appelé "trim release" en aéronautique) qui doit être souvent activé par le pilote pour éviter l'apparition d'efforts statiques, dès lors que les conditions de vol évoluent, ce qui augmente sensiblement la charge de travail du pilote.

Le document GB-A-2 140 174 décrit un système correspondant à l'art antérieur.

La présente invention a pour objet de remédier à ces inconvénients et de permettre la réalisation d'un système de palonnier perfectionné permettant de bénéficier des avantages des palonniers connus à friction et à gradient d'effort, tout en en évitant les inconvénients.

A cette fin, selon l'invention, le système de palonnier pour un hélicoptère comportant un dispositif de contrôle sur l'axe de lacet, tel que par exemple un rotor de queue ou un NOTAR, et des moyens délivrant en continu des paramètres représentatifs de l'état de vol actuel dudit hélicoptère, ledit système comportant un palonnier actionnable par un pilote pour le pilotage en lacet dudit hélicoptère au moyen dudit dispositif de contrôle sur l'axe de lacet et des moyens élastiques de rappel dudit palonnier étant prévus pour exercer une action antagoniste à celle exercée par ledit pilote sur ledit palonnier, est remarquable en ce qu'il comporte :
- un moteur susceptible de déplacer un organe mobile auquel sont attachés, à un point d'attache, lesdits moyens élastiques de rappel ;
- des moyens pour délivrer la différence entre un premier signal électrique représentatif des positions dudit palonnier et un second signal électrique représentatif des positions dudit point d'attache ;
- une liaison pour adresser ladite différence audit moteur ; et
- un premier interrupteur commandable interposé dans ladite liaison et commandé à partir desdits moyens délivrant lesdits paramètres représentatifs de l'état de vol, de façon que :
   . dans sa position de fermeture, ledit premier interrupteur assure la continuité de ladite liaison, lorsque lesdits paramètres sont inférieurs à des seuils de référence, de sorte qu'alors ledit moteur est alimenté par ladite différence entre lesdits premier et second signaux électriques et que le déplacement dudit organe mobile par ledit moteur tend à annuler ladite action antagoniste desdits moyens élastiques de rappel ;
   . dans sa position d'ouverture, ledit premier interrupteur coupe ladite liaison, lorsque lesdits paramètres sont supérieurs auxdits seuils de référence, de sorte qu'alors ledit moteur n'est pas alimenté et que l'action antagoniste desdits moyens élastiques de rappel s'exerce totalement sur ledit palonnier.

Ainsi, en position de fermeture dudit premier interrupteur, ledit système de palonnier bénéficie d'un recentrage automatique des efforts en continu, qui annule les efforts statiques résiduels et donne au pilote une sensation tactile voisine de celle obtenue avec un palonnier à friction. En revanche, en position d'ouverture dudit premier interrupteur, le pilote ressent pleinement l'action antagoniste desdits moyens élastiques de rappel, ce qui lui permet de mieux doser son action au palonnier.

Le pilote ressent donc des efforts de commande variables selon le cas de vol et le degré d'agressivité des manoeuvres.

Ladite différence représentative de l'écart entre la position du palonnier et la position d'attache ou d'ancrage peut être obtenue de plusieurs façons différentes. Par exemple, elle pourrait être calculée dans le pilote automatique ou dans le système de commandes de vol électriques (s'ils existent). Dans ce cas, lesdits moyens pour délivrer ladite différence ne seraient que des moyens de transmission de ladite différence entre l'emplacement de son calcul et ledit système de palonnier. En variante, ladite différence peut être élaborée directement dans ledit système de palonnier. A cet effet, ledit système de palonnier peut comporter de plus :
- au moins un premier capteur de position, associé audit palonnier et engendrant ledit premier signal électrique représentatif des positions dudit palonnier ;
- au moins un second capteur de position, associé audit point d'attache et engendrant ledit second signal électrique représentatif des positions dudit point d'attache ; et
- un soustracteur pour effectuer la différence entre lesdits premier et second signaux électriques,
tandis que ladite liaison relie la sortie dudit soustracteur et ledit moteur.

Bien entendu, un tel soustracteur peut ne pas être formé par un dispositif discret particulier, mais être constitué par une partie d'un système de calcul plus complexe.

De préférence, dans ladite liaison, on dispose de plus des moyens de réglage, tels que amplificateurs à gain variable ou limiteurs, permettant d'ajuster, en position de fermeture dudit premier interrupteur, la sensation tactile du type friction ressentie par le pilote actionnant ledit palonnier.

Dans un exemple de réalisation particulièrement simple du système de palonnier conforme à la présente invention, on utilise, comme paramètres représentatifs de l'état dudit hélicoptère, la vitesse par rapport à l'air (ou vitesse air), la vitesse angulaire de lacet et l'accélération latérale (ou facteur de charge latéral). Dans ce cas, ledit système comporte :
- des premiers, deuxièmes et troisièmes moyens de comparaison pour comparer en continu la vitesse air, la vitesse angulaire de lacet et l'accélération latérale à des seuils de référence Vo, ro, Nyo respectifs ; et
- des moyens de commande dudit premier interrupteur commandé, tels que :
   . ledit premier interrupteur commandé est en position de fermeture si, la vitesse air étant inférieure au seuil de référence Vo, la vitesse angulaire de lacet est inférieure au seuil ro, ou bien si, la vitesse air étant supérieure au seuil de référence Vo, l'accélération latérale est inférieure au seuil de référence Nyo ; et
   . ledit premier interrupteur commandé est en position d'ouverture si, la vitesse air étant inférieure au seuil de référence Vo, la vitesse angulaire de lacet est supérieure au seuil ro, ou bien si, la vitesse air étant supérieure au seuil de référence Vo, l'accélération latérale est supérieure au seuil de référence Nyo.

Ainsi, les efforts sur le palonnier peuvent être recentrés de manière automatique sur la position courante du palonnier, aussi bien à basse vitesse qu'en croisière, dès lors que l'hélicoptère n'effectue pas de manoeuvre brusque. En cas de manoeuvre brusque, le recentrage des efforts est gelé et le pilote ressent l'action antagoniste des moyens élastique de rappel.

Dans un mode de réalisation particulièrement simple, lesdits moyens de commande dudit premier interrupteur commandé se présentent sous la forme d'un premier aiguilleur à deux voies, qui est commandé par lesdits premiers moyens de comparaison de la vitesse air au seuil de référence correspondant et qui commande ledit premier interrupteur commandé par l'un ou l'autre des signaux issus desdits deuxièmes et troisièmes moyens de comparaison.

Par ailleurs, on sait que la restitution des marges de commande sur les hélicoptères est un problème très important, notamment lorsque des systèmes traitent de manière automatique des déplacements de commandes des pilotes.

Dans le cas d'un palonnier à friction, la butée de commande est ressentie lorsque la pédale rencontre la butée physique de débattement de l'équipement. L'approche de la butée n'est perçue que par l'évolution de la position du pied et donc de manière imprécise. En revanche, avec un palonnier à gradient d'effort, la sensation d'effort croissant ressenti aux pieds vient compléter utilement la notion de position absolue du palonnier.

Avantageusement, selon une particularité de la présente invention, afin de pouvoir bénéficier d'une approche des butées semblable à celle des palonniers à gradient d'effort, même lorsque le palonnier conforme à l'invention fonctionne en recentrage automatique, on gèle la motorisation automatique du palonnier à l'approche des butées physiques du débattement du palonnier. Ceci a pour conséquence de définir une plage de débattement proche des butées, où l'on est toujours en pilotage contre effort (le débrayage manuel peut toutefois être activé).

A cet effet, le système de palonnier conforme à la présente invention comporte de plus :
- des quatrièmes moyens de comparaison permettant de comparer en continu ledit second signal électrique représentatif des déplacements dudit point d'attache avec au moins un seuil de référence po représentatif d'au moins une position proche d'une butée d'extrémité du palonnier ; et
- un second interrupteur commandable interposé sur ladite liaison et commandé à l'ouverture par lesdits quatrièmes moyens de comparaison dans le cas où la valeur dudit second signal électrique atteint ledit seuil de référence po.

Ainsi, l'apparition de l'effort en pilotage combiné avec la position du pied avertit le pilote de l'approche de la butée avant que celle-ci ne soit atteinte.

Lorsque la position du point d'attache entre dans une zone proche de butées délimitée par ledit ou lesdits seuils, par exemple à 10% de la butée, la fonction de recentrage automatique est gelée par annulation de la consigne envoyée au moteur. La fonction de commande automatique du recentrage n'intervient donc que sur une plage réduite du débattement total du palonnier.

De ce qui vient d'être décrit, on comprendra aisément que le système de palonnier conforme à l'invention peut être associé à une timonerie mécanique pour commander l'hélicoptère en lacet. Cependant, il est tout particulièrement approprié à être utilisé en association avec un système de commande de vol électrique. Dans ce dernier cas, au moins une partie dudit système de palonnier (à l'exception du palonnier lui-même) peut être intégrée dans ledit système de commande de vol électrique.

Dans le cas où ledit système de commande de vol électrique comporte un dispositif de pilotage automatique destiné à assurer des tenues automatiques dudit hélicoptère en lacet, telles que tenue automatique de cap ou tenue automatique de bille (virages coordonnées), il est avantageux de prévoir de plus :
- un détecteur de l'état de pilotage humain ou de pilotage automatique dudit hélicoptère en lacet ; et
- un second aiguilleur à deux voies interposé sur ladite liaison entre ledit soustracteur et ledit moteur, en aval dudit premier interrupteur, et commandé par ledit détecteur, soit pour assurer la continuité de ladite liaison, soit pour relier ledit dispositif de pilotage automatique audit moteur.

Ainsi, le système de palonnier conforme à la présente invention est totalement compatible avec des modes de pilotage automatique du type tenue de cap (par action autour de l'axe de lacet) ou tenue de bille, qui nécessitent la motorisation du palonnier pour le recentrage des organes de commande lorsque le pilote n'est pas actif.

Le système de palonnier est donc susceptible de permettre les deux modes de fonctionnement suivants :
- le mode piloté, dans lequel le pilote agit sur le palonnier, les fonctions de tenues automatiques étant alors inhibées et la fonction de recentrage automatique des efforts sur le palonnier étant active ;
- le mode automatique, dans lequel le pilote n'agit pas sur le palonnier, les fonctions de tenues automatiques étant actives et motorisant le palonnier pour recentrer les organes de commande (commande de vol électrique ou vérin série du pilote automatique), tandis que la fonction de recentrage automatique des efforts sur le palonnier est inactive.

Ledit détecteur, destiné à détecter l'état actuel de pilotage (humain ou automatique), peut être de différents types. Par exemple, il pourrait être constitué par un capteur d'effort mesurant directement l'effort exercé par le pied sur le palonnier. Cependant, dans un mode de réalisation avantageux, on prévoit que la détection de l'état actuel de pilotage est basée sur la mesure de l'écart du palonnier par rapport à la position d'ancrage courante desdits moyens élastiques de rappel du palonnier.

Dans ce cas, ledit détecteur peut être formé par des cinquièmes moyens de comparaison permettant de comparer en continu, avec un seuil de référence do, ladite différence entre lesdits premier et second signaux électriques, lesdits cinquièmes moyens de comparaison commandant ledit second aiguilleur pour que celui-ci assure, d'une part, la continuité de ladite liaison lorsque ladite différence est supérieure audit seuil de référence do et, d'autre part, la connexion dudit dispositif de pilotage automatique audit moteur lorsque ladite différence est inférieure audit seuil de référence do.

Les figures du dessin annexé feront bien comprendre comment l'invention peut être réalisée. Sur ces figures, des références identiques désignent des éléments semblables.

La figure 1 montre le schéma synoptique d'un exemple de réalisation pour un système de commande de vol pour hélicoptère, incorporant le système de palonnier conforme à la présente invention.

La figure 2 est le schéma synoptique d'un exemple de réalisation du système de palonnier conforme à la présente invention.

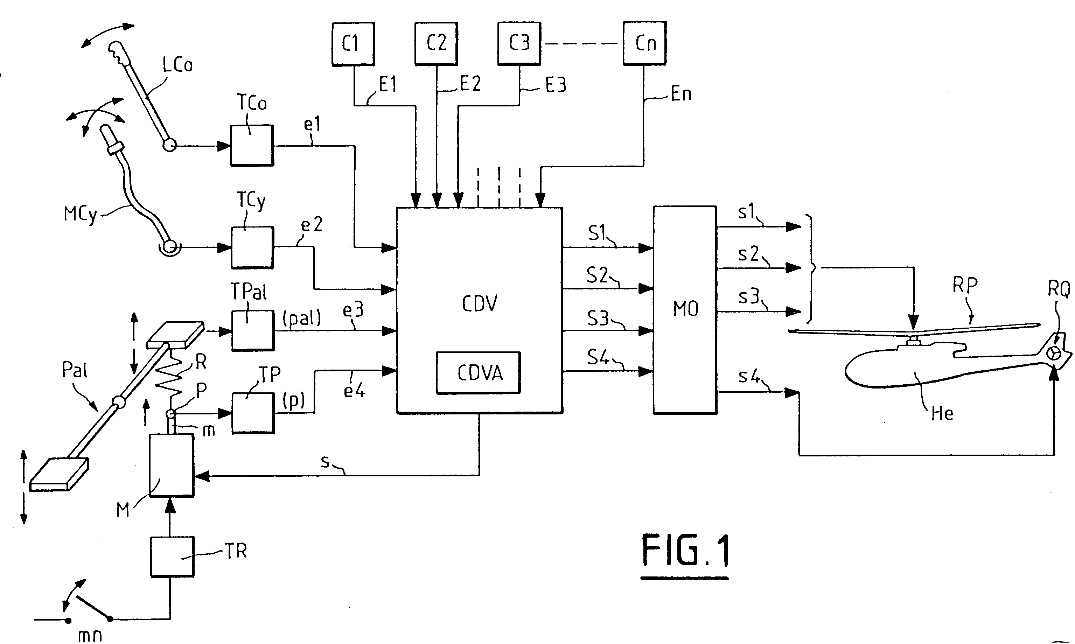

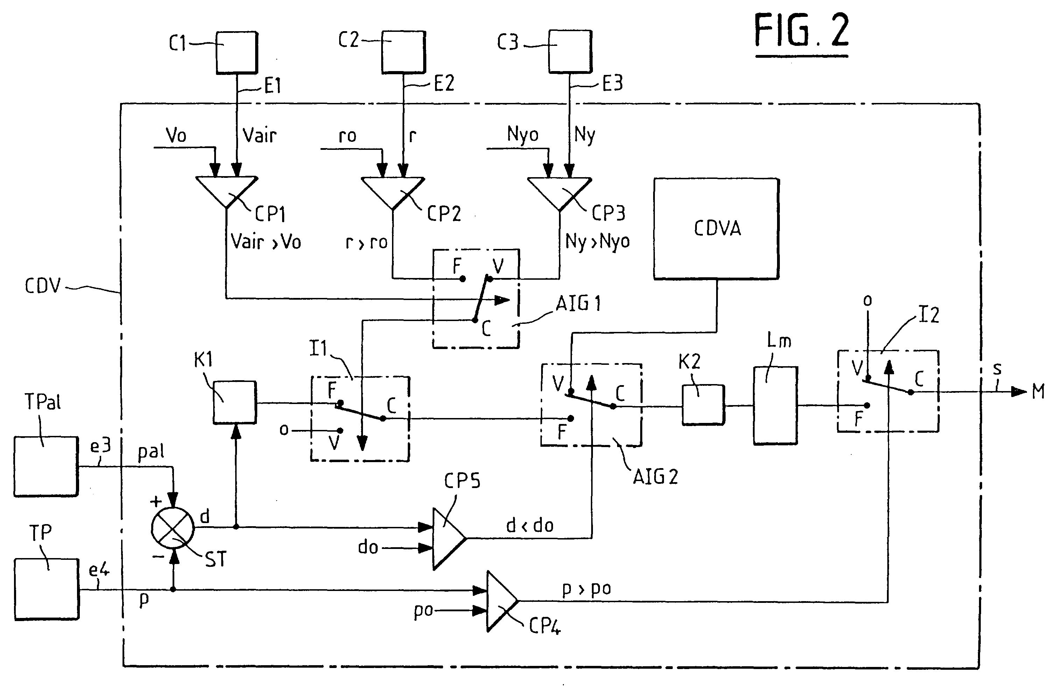

Les systèmes représentés schématiquement par les figures 1 et 2 sont bien entendu montés à bord d'un hélicoptère He à piloter, bien que, pour des raisons de clarté de dessin, l'hélicoptère He soit représenté à petite échelle, extérieurement audit système, sur la figure 1. L'hélicoptère He comporte au moins un rotor principal RP destiné à assurer la sustentation et l'avance, ainsi qu'un dispositif de contrôle sur l'axe de lacet, représenté sous la forme d'un rotor de queue RQ, destiné à assurer l'équilibre et la commande en lacet de l'hélicoptère He.

L'exemple de réalisation de système de commande de vol pour hélicoptère, montré schématiquement sur la figure 1, comporte un dispositif de conduite de vol électrique CDV recevant une pluralité d'informations et émettant des ordres de commande. A cet effet, dans l'exemple représenté, au dispositif CDV sont associés :
- le levier de pas collectif LCo, associé à un transducteur TCo transformant les déplacements dudit levier en un signal électrique adressé au dispositif CDV par une liaison e1 ;
- le manche de pas cyclique MCy, associé à un transducteur TCy transformant les déplacements dudit manche en un signal électrique, adressé au dispositif CDV par une liaison e2 ;
- le palonnier Pal, associé à un capteur de position TPal transformant les déplacements dudit palonnier en un signal électrique pal, adressé au dispositif CDV par une liaison e3 ;
- un dispositif de motorisation du palonnier Pal, comportant au moins un moteur électrique M (par exemple du type vérin électrique) agissant sur un organe mobile m relié audit palonnier Pal par un ressort de rappel R, s'opposant à l'action du pilote sur ledit palonnier ;
- un capteur de position TP, transformant les déplacements du point P, auquel le ressort de rappel R est attaché sur l'organe mobile m en un signal électrique p, adressé au dispositif CDV par une liaison e4 ;
- une pluralité de n capteurs C1 à Cn, montés à bord de l'hélicoptère et délivrant sous forme de signaux électriques une pluralité d'informations sur les états dudit hélicoptère, telles que vitesse air, vitesses angulaires, accélérations angulaires, assiettes, facteurs de charge, etc ..., lesdites informations étant adressées au dispositif CDV par des liaisons E1 à En ;
- un mélangeur d'ordres MO recevant, par les liaisons S1 à S4, les ordres de commande élaborés par le dispositif CDV à partir des signaux adressés par les liaisons e1 à e4 et E1 à En et adressant des ordres de commande, par les liaisons s1 à s3, aux servocommandes du rotor principal RP et, par la liaison s4, à la servocommande du rotor de queue RQ ;
- une liaison s par laquelle le dispositif CDV adresse au moteur M du palonnier Pal des ordres de déplacements de l'organe mobile m et donc du point d'attache P ; et
- un dispositif TR de débrayage et de recentrage manuel des efforts sur le palonnier Pal, commandé par une manette mn à la disposition du pilote.

Sur la figure 2, on a représenté un exemple de réalisation simple du système de palonnier conforme à la présente invention et constitué en partie par le dispositif de commande de vol CDV. Sur la figure 2, on n'a représenté que les liaisons servant à la motorisation du palonnier Pal. Cet exemple de réalisation, conforme à la présente invention, fait intervenir :
- le capteur de position du palonnier TPal, engendrant le signal électrique pal sur la liaison e3, ledit signal pal étant représentatif des déplacements du palonnier Pal ;
- le capteur de position TP, engendrant le signal électrique p sur la liaison e4, ledit signal p étant représentatif des déplacements du point d'attache P ;
- le capteur C1, engendrant sur la liaison E1 un signal électrique Vair représentatif de la vitesse de l'hélicoptère par rapport à l'air ;
- le capteur C2, engendrant sur la liaison E2 un signal électrique r représentatif de la vitesse angulaire de lacet de l'hélicoptère ; et
- le capteur C3, engendrant sur la liaison E3 un signal électrique Ny représentatif du facteur de charge latéral dudit hélicoptère.

Par ailleurs, la partie concernée dudit dispositif de commande de vol CDV comporte :
- un soustracteur ST, relié aux liaisons e3 et e4 et délivrant à sa sortie le signal d, représentatif de la différence pal-p ;
- un premier comparateur CP1, recevant le signal Vair engendré par le capteur C1 et le comparant à une valeur de référence Vo ;
- un deuxième comparateur CP2, recevant le signal r engendré par le capteur C2 et le comparant à une valeur de référence ro ;
- un troisième comparateur CP3, recevant le signal Ny engendré par le capteur C3 et le comparant à une valeur de référence Nyo ;
- un quatrième comparateur CP4, recevant le signal p engendré par le capteur de position TP et le comparant à une valeur de référence po ;
- un cinquième comparateur CP5, recevant le signal d engendré par le soustracteur ST et le comparant à une valeur de référence do ;
- un dispositif de pilotage automatique CDVA réalisant les fonctions de tenues automatiques de l'hélicoptère He en lacet, telles que la tenue automatique de cap ou la tenue automatique de bille ;
- un premier aiguilleur à deux voies AIG1 commandé par ledit premier comparateur CP1 et dont l'entrée de repos F et l'entrée de travail V sont respectivement reliées aux sorties desdits deuxième et troisième comparateurs CP2 et CP3 ;
- un premier interrupteur commandable I1 commandé par la sortie commune C dudit premier aiguilleur AIG1 et dont l'entrée de repos F est reliée à la sortie du soustracteur ST, par exemple par l'intermédiaire d'un amplificateur K1 à gain variable, de façon à recevoir le signal d. L'entrée de travail V de l'interrupteur I1 est au potentiel 0 ;
- un second aiguilleur à deux voies AIG2 commandé par ledit cinquième comparateur CP5 et dont l'entrée de repos F et l'entrée de travail V sont respectivement reliées à la sortie commune C dudit premier interrupteur I1 et à la sortie du dispositif de pilotage automatique CDVA ; et
- un second interrupteur commandable I2 commandé par ledit quatrième comparateur CP4 et dont l'entrée de repos F est reliée à la sortie commune C dudit second aiguilleur AIG2, par exemple par l'intermédiaire d'un amplificateur K2 à gain variable et d'un limiteur Lm. L'entrée de travail V de l'interrupteur I2 est au potentiel 0.

Dans le dispositif de la figure 2 :
- le premier aiguilleur AIG1 est commandé en position de travail --pour laquelle la sortie du troisième comparateur CP3 commande le premier interrupteur I1-- lorsque le premier comparateur CP1 reçoit un signal Vair supérieur à la référence Vo ;
- le premier interrupteur commandable I1 est commandé en position de repos --pour laquelle le signal d est transmis au second aiguilleur AIG2-- lorsque ledit premier aiguilleur AIG1 est en position de travail et que ledit troisième comparateur CP3 reçoit un signal Ny supérieur à la référence Nyo, ou lorsque ledit premier aiguilleur AIG1 est en position de repos et que ledit deuxième comparateur CP2 reçoit un signal r supérieur à la référence Ro ;
- le second aiguilleur AIG2 est commandé par le cinquième comparateur CP5 en position de travail --pour laquelle la sortie du dispositif CDVA est reliée audit second interrupteur I2 à travers l'amplificateur K2 et le limiteur Lm-- lorsque le signal d est inférieur à la référence do ; et
- le second interrupteur I2 est commandé en position de travail --pour laquelle la sortie s du dispositif CDV est isolée de la sortie commune C du second aiguilleur AIG2--lorsque le signal p est supérieur à la référence po.

Les divers modes de fonctionnement du dispositif de la figure 2 sont les suivants :

### A/ Contrôle de l'hélicoptère en lacet par pilotage humain.

### a) pilotage à basse vitesse (Vair ≤ Vo)

Si la vitesse air Vair est inférieure à la référence Vo (Vo valant par exemple 83,34 Km/h soit 45 Kts), le premier aiguilleur AIG1 est en position de repos, de sorte que le premier interrupteur I1 est commandé par le deuxième comparateur CP2. Si, par ailleurs, la vitesse angulaire en lacet r est inférieure à la référence ro (ro valant par exemple 10°/s), le premier interrupteur I1 adresse sur la sortie s, à travers le second aiguilleur AIG2 et le second interrupteur I2 alors tous deux en position de repos, un signal de commande résultant du traitement du signal de différence d par les gains K1 et K2 et par le limiteur Lm. Ce signal de commande pilote le moteur M.

Ainsi, pour des vitesses air inférieures par exemple à 83,34 Km/h soit 45 Kts où l'hélicoptère est le plus susceptible d'effectuer des rotations en lacet, le pilotage de la motorisation de centrage des efforts du palonnier est tel que le point neutre P suit les mouvements du palonnier Pal, dès lors que la vitesse angulaire de lacet r est inférieure au seuil ro.

Par suite, lorsque l'hélicoptère se déplace à faible vitesse avec un cap à peu près constant (vitesse angulaire de lacet inférieure à ro), le moteur M, en déplaçant de façon appropriée le point neutre P, recentre en permanence et automatiquement l'effort de rappel exercé par le ressort R sur le palonnier Pal. Un tel recentrage automatique de l'effort de rappel peut être réglé de façon à être plus progressif que le simple débrayage engendré par action sur le dispositif TR qui engendre généralement une disparition brutale des efforts. La sensation ressentie par le pilote peut être voisine de celle obtenue avec un palonnier à friction et tous les efforts statiques sont supprimés, ce qui élimine le besoin d'un recentrage manuel par action du dispositif TR.

Si le pilote commande des rotations rapides, la vitesse angulaire en lacet r devient supérieure à la référence ro, de sorte que le premier interrupteur I1 passe en position travail, coupant la liaison entre la sortie s et l'entrée d. Le moteur M n'est donc plus commandé et le recentrage des efforts au palonnier est passivé. Le pilote retrouve alors les avantages du palonnier à gradient d'effort pour le dosage et l'arrêt rapide de la rotation en lacet de l'appareil.

### b) pilotage en vol d'avancement à vitesse élevée (Vair > Vo)

Dès que la vitesse air Vair devient supérieure à la référence Vo, le premier aiguilleur AIG1 passe en position de travail, de sorte que le premier interrupteur I1 est commandé par le troisième comparateur CP3. Il en résulte, de façon analogue à ce qui a été mentionné ci-dessus à propos de la vitesse angulaire de lacet r, que maintenant le recentrage automatique des efforts au palonnier est commandé par le facteur de charge latéral Ny, et notamment en fonction de la valeur de celui-ci par rapport à la référence Nyo, qui peut éventuellement être choisie variable en fonction de la vitesse air Vair.

Ainsi, si en vol d'avancement, le pilote actionne le palonnier Pal de façon à maintenir la bille centrée, ce qui correspond à une valeur de Ny pratiquement nulle et donc inférieure à la référence Nyo, le moteur M recentre en permanence et automatiquement les efforts de rappel par le ressort R, de façon semblable à ce qui a été décrit ci-dessus à propos du pilotage à basse vitesse avec de faibles valeurs de r, et le pilote éprouve des sensations semblables à celles engendrées par un palonnier à friction.

En revanche, si le pilote engage une action au pied sur le palonnier Pal pour engendrer un dérapage stabilisé de l'hélicoptère et qu'en conséquence le facteur de charge Ny devient supérieur à la référence Nyo, le premier interrupteur I1 passe de sa position de repos conductrice à sa position de travail de coupure. Le recentrage des efforts est alors passivé (de façon semblable à ce qui est décrit ci-dessus pour le pilotage à basse vitesse et à vitesse angulaire en lacet élevée) et le pilote retrouve alors les avantages du palonnier à gradient d'effort pour le dosage du dérapage.

Bien entendu, si le pilote désire maintenir volontairement le dérapage sans avoir à exercer des efforts statiques sur le palonnier Pal, il peut recentrer manuellement lesdits efforts au moyen du dispositif TR.

### B/ Couplage avec les fonctions de tenue de cap et de tenue de bille.

Pour expliquer le passage bidirectionnel entre le mode de pilotage au palonnier (pilotage humain) et le mode de pilotage en lacet en tenues automatiques (pilotage par le dispositif CDVA), on suppose, dans l'explication ci-après, que l'on se trouve initialement en position stabilisée, avec les fonctions de tenues automatiques activées, c'est-à-dire que le second aiguilleur AIG2 est en position de travail et relie le dispositif CDVA au moteur M.

Si le pilote souhaite changer de cas de vol, par exemple pour effectuer un changement de cap rapide à basse vitesse, il exerce un brusque effort sur le palonnier, de sorte qu'il engendre un écart de position entre le palonnier Pal et le point P d'attache du ressort de rappel R sur l'organe mobile m. La différence d croît donc. Dès que la différence d devient égale ou supérieure à la référence do, le comparateur CP5 commande le second aiguilleur AIG2 pour qu'il passe en position de repos et relie le premier interrupteur I1 au moteur M. Les fonctions de tenues automatiques (exercées par le dispositif CDVA) sont donc alors inhibées.

Dans cet exemple, si on se place dans le cas où le changement de cap est effectué à basse vitesse (Vair < Vo), c'est donc la vitesse angulaire r qui commande le premier interrupteur I1.

Le passage rapide d'un cap à un autre entraîne une brusque variation de la vitesse angulaire r qui reste supérieure au seuil ro. Par suite, comme cela a été expliqué ci-dessus, le premier interrupteur I1 passe en position travail en coupant la liaison avec la sortie s. Le pilote agit donc contre les efforts appliqués sur le palonnier Pal par le ressort de rappel R.

Cependant, à l'approche du nouveau cap désiré, le pilote, pour restabiliser l'hélicoptère, fait chuter la vitesse angulaire r. Dès que celle-ci devient inférieure en décroissant à la référence ro, le premier interrupteur I1 repasse en position de repos et le moteur M est alimenté par la différence d, de sorte que l'effort de rappel du ressort R est recentré automatiquement.

Si la position statique du palonnier a changé entre les deux cas de vol, le point d'attache P rallie la nouvelle position du palonnier, ce qui se traduit pour le pilote par la sensation de diminution automatique des efforts.

Dès que la position du point d'attache P a rejoint la position courante du palonnier, la différence d redevient inférieure à la référence do, de sorte que le comparateur CP5 commande le second aiguilleur AIG2 pour qu'il passe à sa position de travail, reliant le dispositif CDVA au moteur M.

Les fonctions de tenues automatiques en lacet sont donc de nouveau actives.

Par ailleurs, on remarquera que, grâce au quatrième comparateur CP4 et au second interrupteur I2, le pilote est averti de l'approche d'une butée du palonnier Pal. En effet, dès que ledit second signal électrique p devient supérieur ou égal à la valeur de référence po, le second interrupteur I2 est commandé à l'ouverture. Par suite, l'alimentation du moteur M est coupée et le pilote ressent l'effort croissant qu'il exerce sur le palonnier à l'encontre de l'action du ressort de rappel R. Le pilote est donc alerté de manière tactile de l'approche de la butée de palonnier, d'autant plus qu'il perçoit simultanément sa marge de commande par la position absolue de son pied et l'étirement de sa jambe.

On remarquera de plus que la fonction du quatrième comparateur CP4 peut être réalisée de différentes façons, notamment compte tenu du fait que ledit palonnier Pal présente deux butées d'extrémité, ce qui nécessiterait donc deux valeurs de référence po.

Sur la figure 2, on a supposé que le quatrième comparateur CP4 comparait la valeur absolue du signal p à une référence po, c'est-à-dire que la marge de détection des deux butées d'extrémité était la même.

Par exemple, si l'on suppose que le palonnier présente un débattement, de part et d'autre d'une position neutre, de respectivement +50% et -50%, on peut prendre po égale à 40%, de sorte que le second interrupteur I2 sera ouvert dès que le palonnier s'approche de moins de 10% de chacune desdites butées d'extrémité.

Bien entendu, au lieu de ne prévoir qu'une valeur de référence po comme ci-dessus et de la comparer à la valeur absolue du signal p, il serait équivalent de définir deux valeurs de référence po1 et po2, chacune associée à une butée d'extrémité du palonnier Pal, et de comparer ledit signal p (et non plus sa valeur absolue) auxdites valeurs de références po1 et po2.

On notera de plus que, sur la figure 1, le palonnier Pal est représenté de façon fonctionnelle très schématique. Bien entendu, ce palonnier peut, comme cela est usuel, être constitué de deux pédales d'axe horizontal couplées pour se déplacer en opposition.

## Revendications

1. Système de palonnier pour un hélicoptère (He) comportant un dispositif de contrôle sur l'axe de lacet (RQ) et des moyens (C1 à Cn) délivrant en continu des paramètres (Vair, r, Ny, ...) représentatifs de l'état de vol actuel dudit hélicoptère, ledit système comportant un palonnier (Pal) actionnable par un pilote pour le pilotage en lacet dudit hélicoptère au moyen dudit dispositif de contrôle sur l'axe de lacet et des moyens élastiques (R) de rappel dudit palonnier (Pal) étant prévus pour exercer une action antagoniste à celle exercée par ledit pilote sur ledit palonnier (Pal),
caractérisé en ce qu'il comporte :
- un moteur (M) susceptible de déplacer un organe mobile (m) auquel sont attachés, à un point d'attache (P), lesdits moyens élastiques de rappel (R) ;
- des moyens pour délivrer la différence (d) entre un premier signal électrique (pal) représentatif des positions dudit palonnier (Pal) et un second signal électrique (p) représentatif des positions dudit point d'attache (P) ;
- une liaison (K1, K2, Lm, s) pour adresser ladite différence (d) audit moteur (M) ; et
- un premier interrupteur commandable (I1) interposé dans ladite liaison et commandé à partir desdits moyens (C1 à Cn) délivrant lesdits paramètres représentatifs de l'état de vol, de façon que :
. dans sa position de fermeture, ledit premier interrupteur (I1) assure la continuité de ladite liaison, lorsque lesdits paramètres sont inférieurs à des seuils de référence (ro, Nyo), de sorte qu'alors ledit moteur (M) est alimenté par ladite différence (d) entre lesdits premier et second signaux électriques et que le déplacement dudit organe mobile (m) par ledit moteur (M) tend à annuler ladite action antagoniste desdits moyens élastiques de rappel (R) ;
. dans sa position d'ouverture, ledit premier interrupteur (I1) coupe ladite liaison, lorsque lesdits paramètres sont supérieurs auxdits seuils de référence, de sorte qu'alors ledit moteur (M) n'est pas alimenté et que l'action antagoniste desdits moyens élastiques de rappel (R) s'exerce totalement sur ledit palonnier.

2. Système de palonnier selon la revendication 1,
caractérisé en ce qu'il comporte, de plus :
- au moins un premier capteur de position (TPal), associé audit palonnier (Pal) et engendrant ledit premier signal électrique (pal) représentatif des positions dudit palonnier (Pal) ;
- au moins un second capteur de position (TP), associé audit point d'attache (P) et engendrant ledit second signal électrique (p) représentatif des positions dudit point d'attache (P) ;
- un soustracteur (ST) pour effectuer la différence (d) entre lesdits premier et second signaux électriques (pal et p) ; et
en ce que ladite liaison (K1, K2, Lm, s) relie la sortie dudit soustracteur (ST) et ledit moteur (M).

3. Système de palonnier selon l'une des revendications 1 ou 2,
caractérisé en ce que des moyens de réglage (K1, K2, Lm) sont prévus dans ladite liaison pour ajuster la sensation tactile ressentie par le pilote actionnant ledit palonnier (Pal).

4. Système de palonnier selon l'une des revendications 1 à 3, dans lequel lesdits paramètres représentatifs de l'état dudit hélicoptère comprennent au moins la vitesse air (Vair), la vitesse angulaire de lacet (r) et l'accélération latérale (Ny),
caractérisé en ce qu'il comporte :
- des premiers, deuxièmes et troisièmes moyens de comparaison (CP1, CP2, CP3) permettant de comparer en continu la vitesse air, la vitesse angulaire de lacet et l'accélération latérale à des seuils de référence Vo, ro, Nyo respectifs ; et
- des moyens (AIG1) de commande dudit premier interrupteur commandé (I1), tels que :
. ledit premier interrupteur commandé (I1) est en position de fermeture si, la vitesse air étant inférieure au seuil de référence Vo, la vitesse angulaire de lacet est inférieure au seuil ro, ou bien si, la vitesse air étant supérieure au seuil de référence Vo, l'accélération latérale est inférieure au seuil de référence Nyo ; et
. ledit premier interrupteur commandé (I1) est en position d'ouverture si, la vitesse air étant inférieure au seuil de référence Vo, la vitesse angulaire de lacet est supérieure au seuil ro, ou bien si, la vitesse air étant supérieure au seuil de référence Vo, l'accélération latérale est supérieure au seuil de référence Nyo.

5. Système de palonnier selon la revendication 4,
caractérisé en ce que lesdits moyens (AIG1) de commande dudit premier interrupteur commandé (I1) se présentent sous la forme d'un premier aiguilleur à deux voies, qui est commandé par lesdits premiers moyens (CP1) de comparaison de la vitesse air (Vair) au seuil de référence correspondant (Vo) et qui commande ledit premier interrupteur (I1) par l'un ou l'autre des signaux issus desdits deuxièmes et troisièmes moyens de comparaison (CP2, CP3).

6. Système de palonnier selon l'une quelconque des revendications 1 à 5,
caractérisé en ce qu'il comporte de plus :
- des quatrièmes moyens de comparaison (CP4) permettant de comparer en continu ledit second signal électrique (p) représentatif des déplacements dudit point d'attache avec au moins un seuil de référence (po) représentatif d'au moins une position proche d'une butée d'extrémité du palonnier ; et
- un second interrupteur commandable (I2) interposé sur ladite liaison, en aval dudit premier interrupteur, et commandé à l'ouverture par lesdits quatrièmes moyens de comparaison (CP4) dans le cas où la valeur dudit second signal électrique (p) atteint ledit seuil de référence (po).

7. Système de palonnier selon l'une quelconque des revendications 1 à 6, pour un hélicoptère (He) pourvu d'un système de commande de vol électrique (CDV),
caractérisé en ce que ledit système de palonnier est au moins en partie intégré dans ledit système de commande de vol électrique (CDV).

8. Système de palonnier selon la revendication 7, pour un hélicoptère (He) dans lequel ledit système de commande de vol électrique (CDV) comporte un dispositif de pilotage automatique (CDVA) destiné à assurer des tenues automatiques dudit hélicoptère en lacet,
caractérisé en ce qu'il comporte de plus :
- un détecteur (CP5) de l'état de pilotage humain ou de l'état de pilotage automatique dudit hélicoptère en lacet ; et
- un second aiguilleur à deux voies (AIG2) interposé sur ladite liaison, en aval dudit premier interrupteur (I1), et commandé par ledit détecteur (CP5), soit pour assurer la continuité de ladite liaison, soit pour relier ledit dispositif de pilotage automatique (CDVA) audit moteur (M).

9. Système de palonnier selon la revendication 8,
caractérisé en ce que ledit détecteur est formé par des cinquièmes moyens de comparaison (CP5) permettant de comparer en continu, avec un seuil de référence (do), ladite différence (d) entre lesdits premier et second signaux électriques (pal et p), lesdits cinquièmes moyens de comparaison (CP5) commandant ledit second aiguilleur (AIG2) pour que celui-ci assure, d'une part, la continuité de ladite liaison (K1, K2, Lm, s) lorsque ladite différence (d) est supérieure audit seuil de référence (do) et, d'autre part, la connexion dudit dispositif de pilotage automatique (CDVA) audit moteur (M) lorsque ladite différence (d) est inférieure audit seuil de référence (do).

## Patentansprüche

1. Steuerhebelsystem für einen Hubschrauber (He), das eine Kontrolleinrichtung für die Gierachse (RQ) und Mittel (C1 bis Cn) umfaßt, die ständig Parameter (Vair, r, Ny, ...) liefern, die dem augenblicklichen Flugzustand des Hubschraubers entsprechen, wobei das System einen Steuerhebel (Pal), der von einem Piloten zur Fluglagensteuerung beim Gieren des Hubschraubers mittels der Kontrolleinrichtung für die Gierachse betätigbar ist, und elastische Rückstellmittel (R) für den Steuerhebel (Pal) umfaßt, die vorgesehen sind, um eine Wirkung auszuüben, die derjenigen, die vom Piloten auf den Steuerhebel (Pal) ausgeübt wird, entgegenwirkt, dadurch gekennzeichnet, daß es umfaßt:
- einen Motor (M), der geeignet ist, ein bewegliches Element (m) zu verschieben, an dem in einem Befestigungspunkt (P) die elastischen Rückstellmittel (R) angebracht sind,
- Mittel zum Liefern der Differenz (d) zwischen einem ersten elektrischen Signal (pal), das den Positionen des Steuerhebels (Pal) entspricht, und einem zweiten elektrischen Signal (p), das den Positionen des Befestigungspunktes (P) entspricht,
- eine Verbindung (K1, K2, Lm, s), um die Differenz (d) an den Motor (M) zu senden, und
- einen ersten steuerbaren Schalter (I1), der in die Verbindung geschaltet ist und von den Mitteln (C1 bis Cn) betätigt wird, die die Parameter liefern, die dem Flugzustand entsprechen, derart, daß
· der erste Schalter (I1) in seiner geschlossenen Position die Durchgängigkeit der Verbindung sicherstellt, wenn die Parameter niedriger als Bezugsschwellen (ro, Nyo) sind, so daß dann der Motor (M) mit der Differenz (d) zwischen dem ersten und zweiten elektrischen Signal versorgt wird und daß die Verschiebung des beweglichen Organs (m) durch den Motor (M) dahin strebt, die Gegenwirkung der elastischen Rückstellmittel (R) aufzuheben,
· der erste Schalter (I1) in seiner offenen Position die Verbindung unterbricht, wenn die Parameter größer als die Bezugsschwellen sind, so daß dann der Motor (M) nicht versorgt wird und daß die Gegenwirkung der elastischen Rückstellmittel (R) vollständig auf den Steuerhebel ausgeübt wird.

2. Steuerhebelsystem nach Anspruch 1, dadurch gekennzeichnet, daß es außerdem aufweist:
- mindestens einen ersten Positionssensor (TPal), der mit dem Steuerhebel (Pal) verbunden ist und das erste elektrische Signal (pal) erzeugt, das den Positionen des Steuerhebels (Pal) entspricht,
- mindestens einen zweiten Positionssensor (TP), der mit dem Befestigungspunkt (P) verbunden ist und das zweite elektrische Signal (p) erzeugt, das den Positionen des Befestigungspunktes (P) entspricht,
- ein Subtraktionsglied (ST) zur Bildung der Differenz (d) zwischen dem ersten und zweiten elektrischen Signal (pal und p) und
daß die Verbindung (K1, K2, Lm, s) den Ausgang des Subtraktionsglieds (ST) mit dem Motor (M) verbindet.

3. Steuerhebelsystem nach einem der Ansprüche 1 oder 2, dadurch gekennzeichnet, daß in der Verbindung Regelungsmittel (K1, K2, Lm) zum Einstellen der vom Piloten, der den Steuerhebel (Pal) betätigt, wahrgenommenen Tastempfindung vorgesehen sind.

4. Steuerhebelsystem nach einem der Ansprüche 1 bis 3, bei dem die Parameter, die dem Zustand des Hubschraubers entsprechen, wenigstens die Fluggeschwindigkeit (Vair), die Gierwinkelgeschwindigkeit (r) und die laterale Beschleunigung (Ny) umfassen, dadurch gekennzeichnet, daß sie aufweist:
- erste, zweite und dritte Vergleichsmittel (CP1, CP2, CP3), die es gestatten, ständig die Flugzeuggeschwindigkeit, die Gierwinkelgeschwindigkeit und die laterale Beschleunigung mit jeweiligen Bezugsschwellen Vo, ro, Nyo zu vergleichen, und
- Betätigungsmittel (AIG1) für den ersten gesteuerten Schalter (I1), so daß
· sich der erste gesteuerte Schalter (I1) in der geschlossenen Position befindet, wenn die Fluggeschwindigkeit geringer als die Bezugsschwelle Vo und die Gierwinkelgeschwindigkeit geringer als die Schwelle ro ist, oder auch wenn die Fluggeschwindigkeit höher als die Bezugsschwelle Vo und die laterale Beschleunigung geringer als die Bezugsschwelle Nyo ist, und
· sich der erste gesteuerte Schalter (I1) in der geöffneten Position befindet, wenn die Fluggeschwindigkeit geringer als die Bezugsschwelle Vo ist und die Gierwinkelgeschwindigkeit höher als die Schwelle ro ist, oder auch wenn die Fluggeschwindigkeit höher als die Bezugsschwelle Vo ist und die laterale Beschleunigung höher als die Bezugsschwelle Nyo ist.

5. Steuerhebelsystem nach Anspruch 4, dadurch gekennzeichnet, daß die Mittel (AIG1) für die Steuerung des ersten gesteuerten Schalters (I1) in Form eines ersten Zwei-Wege-Weichenstellers vorliegen, der von den ersten Mitteln (CP1) für den Vergleich der Fluggeschwindigkeit (Vair) mit der entsprechenden Bezugsschwelle (Vo) gesteuert wird und den ersten Schalter (I1) durch eines der beiden von den zweiten und dritten Vergleichsmitteln (CP2, CP3) stammenden Signale betätigt.

6. Steuerhebelsystem nach einem der Ansprüche 1 bis 5, dadurch gekennzeichnet, daß es außerdem aufweist:
- vierte Vergleichsmittel (CP4), die es gestatten, ständig das zweite elektrische Signal (p), das den Verschiebungen des Befestigungspunktes entspricht, mit wenigstens einer Bezugsschwelle (po) zu vergleichen, die wenigstens einer Position nahe des Endanschlags des Steuerhebels entspricht, und
- einen zweiten steuerbaren Schalter (I2), der hinter den ersten Schalter in die Verbindung geschaltet ist und in dem Falle von den vierten Vergleichsmitteln (C4) zur Öffnung betätigt wird, in dem der Wert des zweiten elektrischen Signals (p) die Bezugsschwelle (po) erreicht.

7. Steuerhebelsystem nach einem der Ansprüche 1 bis 6 für einen Hubschrauber (He), der mit einem elektrischen Flugsteuerungssystem (CDV) versehen ist, dadurch gekennzeichnet, daß das Steuerhebelsystem wenigstens teilweise in das elektrische Flugsteuerungssystem (CDV) integriert ist.

8. Steuerhebelsystem nach Anspruch 7 für einen Hubschrauber (He), bei dem das elektrische Flugsteuerungssystem (CDV) eine Autopiloteinrichtung (CDVA) aufweist, die dazu bestimmt ist, die automatische Führung des Hubschraubers beim Gieren sicherzustellen, dadurch gekennzeichnet, daß es außerdem umfaßt:
- einen Detektor (CP5) für den Zustand der Flugsteuerung durch einen Menschen oder den Autopilotzustand des Hubschraubers beim Gieren, und
- einen zweiten Zwei-Wege-Weichensteller (AIG2), der hinter dem ersten Schalter (I1) in die Verbindung geschaltet ist und vom Detektor (CP5) gesteuert wird, entweder um die Durchgängigkeit der Verbindung sicherzustellen, oder um die Autopiloteinrichtung (CDVA) mit dem Motor (M) zu verbinden.

9. Steuerhebelsystem nach Anspruch 8, dadurch gekennzeichnet, daß der Detektor von fünften Vergleichsmitteln (CP5) gebildet ist, die gestatten, ständig die Differenz (d) zwischen den ersten und zweiten elektrischen Signalen (pal und p) mit einer Bezugsschwelle (do) zu vergleichen, wobei die fünften Vergleichsmittel (CP5) den zweiten Weichensteller (ATG2) steuern, damit dieser einerseits, wenn die Differenz (d) größer als die Bezugsschwelle (do) ist, die Durchgängigkeit der Verbindung (K1, K2, Lm, s) und andererseits, wenn die Differenz (d) geringer als die Bezugsschwelle (do) ist, die Verbindung der Autopiloteinrichtung (CDVA) mit dem Motor (M) sicherstellt.

## Claims

1. Rudder bar system for a helicopter (He) including a control device on the yaw axis (RQ) and means (C1 to Cn) continuously delivering parameters (Vair, r, Ny, etc.) representative of the current flight status of the said helicopter, the said system including a rudder bar (Pal) which can be actuated by a pilot for piloting the said helicopter in yaw by means of the said control device on the yaw axis, and elastic means (R) for return of the said rudder bar (Pal) being provided to exert an action counter to that exerted by the said pilot on the said rudder bar (Pal), characterized in that it includes:
- a motor (M) capable of displacing a movable member (m) to which the said elastic return means (R) are attached at an attachment point (P);
- means for delivering the difference (d) between a first electrical signal (pal) representative of the positions of the said rudder bar (Pal) and a second electrical signal (p) representative of the positions of the said attachment point (P);
- a link (K1, K2, Lm, s) for addressing the said difference (d) to the said motor (M); and
- a first controllable switch (I1) interposed in the said link and controlled from the said means (C1 to Cn) delivering the said parameters representative of the flight status, in such a way that:
· in its closed position, the said first switch (I1) provides continuity of the said link, when the said parameters are less than reference thresholds (ro, Nyo), so that then the said motor (M) is supplied with the said difference (d) between the said first and second electrical signals and so that the displacement of the said movable member (m) by the said motor (M) tends to cancel out the said countering action of the said elastic return means (R);
· in its open position, the said first switch (I1) cuts the said link, when the said parameters are greater than the said reference thresholds, so that then the said motor (M) is not supplied and so that the countering action of the said elastic return means (R) is exerted fully on the said rudder bar.

2. Rudder bar system according to Claim 1, characterized in that it additionally includes:
- at least one first position sensor (TPal), associated with the said rudder bar (Pal) and generating the said first electrical signal (pal) representative of the positions of the said rudder bar (Pal);
- at least one second position sensor (TP), associated with the said attachment point (P) and generating the said second electrical signal (p) representative of the positions of the said attachment point (P);
- a subtractor (ST) for forming the difference (d) between the said first and second electrical signals (pal and p); and
in that the said link (K1, K2, Lm, s) links the output of the said subtractor (ST) and the said motor (M).

3. Rudder bar system according to either of Claims 1 and 2, characterized in that adjustment means (K1, K2, Lm) are provided in the said link in order to adjust the tactile sensation felt by the pilot actuating the said rudder bar (Pal).

4. Rudder bar system according to one of Claims 1 to 3, in which the said parameters representative of the state of the said helicopter comprise at least the air speed (Vair), the yaw angular speed (r) and the lateral acceleration (Ny), characterized in that it includes:
- first, second and third comparison means (CP1, CP2, CP3) making it possible continuously to compare the air speed, the yaw angular speed and the lateral acceleration with respective reference thresholds Vo, ro, Nyo; and
- means (AIG1) for control of the said first controlled switch (I1), such that:
· the said first controlled switch (I1) is in closed position if, with the air speed being below the reference threshold Vo, the yaw angular speed is below the threshold ro, or equally if, with the air speed being above the reference threshold Vo, the lateral acceleration is below the reference threshold Nyo; and
· the said first controlled switch (I1) is in open position if, with the air speed being below the reference threshold Vo, the yaw angular speed is above the threshold ro, or equally if, with the air speed being above the reference threshold Vo, the lateral acceleration is above the reference threshold Nyo.

5. Rudder bar system according to Claim 4, characterized in that the said means (AIG1) for control of the said first controlled switch (I1) take the form of a first two-channel router, which is controlled by the said first means (CP1) for comparison of the air speed (Vair) with the corresponding reference threshold (Vo) and which controls the said first switch (I1) by one or other of the signals output by the said second and third comparison means (CP2, CP3).

6. Rudder bar system according to any one of Claims 1 to 5, characterized in that it additionally includes:
- fourth comparison means (CP4) making it possible continuously to compare the said second electrical signal (p) representative of the displacements of the said attachment point with at least one reference threshold (po) representative of at least one nearby position of an end stop of the rudder bar; and
- a second controllable switch (I2) interposed on the said link, downstream of the said first switch, and driven open by the said fourth comparison means (CP4) in the case in which the value of the said second electrical signal (p) reaches the said reference threshold (po).

7. Rudder bar system according to any one of Claims 1 to 6, for a helicopter (He) provided with a fly-by-wire system (CDV), characterized in that the said rudder bar system is at least partly integrated into the said fly-by-wire system (CDV).

8. Rudder bar system according to Claim 7, for a helicopter (He) in which the said fly-by-wire system (CDV) includes an automatic piloting device (CDVA) intended to provide automatic hold of the said helicopter in yaw, characterized in that it additionally includes:
- a detector (CP5) of the human piloting status or of the automatic piloting status of the said helicopter in yaw; and
- a second two-channel router (AIG2) interposed on the said link, downstream of the said first switch (I1), and controlled by the said detector (CP5), either to provide the continuity of the said link, or to link the said automatic pilot device (CDVA) to the said motor (M).

9. Rudder bar system according to Claim 8, characterized in that the said detector is formed by fifth comparison means (CP5) making it possible continuously to compare the said difference (d) between the said first and second electrical signals (pal and p) with a reference threshold (do), the said fifth comparison means (CP5) controlling the said second router (AIG2) so that the latter provides, on the one hand, continuity of the said link (K1, K2, Lm, s) when the said difference (d) is above the said reference threshold (do) and, on the other hand, connection of the said automatic pilot device (CDVA) to the said motor (M) when the said difference (d) is below the said reference threshold (do).
